# EUROPEAN PATENT SPECIFICATION

(11) **EP 1 407 701 B1**
(45) Date of publication and mention of the grant of the patent: **26.01.2005**
(21) Application number: 02745433.9
(22) Date of filing: 28.06.2002
(51) Int. Cl.: A47J 43/07, A47J 43/08

(54) **GRINDING ARM WITH A REMOVABLE END FOR CLEANING PURPOSES**
MAHLARM MIT ZU REINIGUNGSZWECKEN ABNEHMBAREM ENDE
BRAS TRITURATEUR DONT L'EXTREMITE EST DEMONTABLE POUR ETRE NETTOYEE

(30) Priority: 03.07.2001 ES 200101544
(43) Date of publication of application: 14.04.2004
(73) Proprietor: Irimartek S.A., 31789 Lesaka, Navarra (ES)
(72) Inventor: IRIARTE MARQUINA, Eneko, 31789 Lesaka, Navarra (ES)
(74) Representative: Baker, Karen Veronica, Dr.
(86) International application number: PCT/ES2002/000317
(87) International publication number: WO 2003/003889

(56) References cited:
- ES-T3- 2 081 676
- FR-A1- 2 766 080
- FR-A1- 2 770 121
- US-B1- 6 186 056

## Description

The present invention refers to a mincer arm, of the ones which are connected in a removable way respect to an operation motor block, being applied for several functions, especially, but without limitative character, in the preparation of food.

The use of manual electric household appliances made up of an actuating motor block and an arm which includes a rotary shaft at whose end a tool is situated which can vary in function of the operations to which the appliance is destined, is well known.

Apart from other possibilities of use which do not remain excluded, this kind of devices are used in a generalized way in the preparation of food, field in which some extreme hygienic conditions are required, so that the cleaning of the elements has a fundamental importance.

In this sense, the mentioned devices are carried out, generally with the tool holding arm in detachable disposition respect to the motor block, with which the arm cleaning, which is the part which enters in touch with the products on which the application operations act, results easier to be carried out, especially because with the independence of the arm there is no risk that water enters in the motor block where the electric elements are housed.

However, the part with greater incidence in relation to the products on which the application operations act, is the end of the arm where the actuating tool is incorporated and a protection situated around the same. At the mentioned end of the arm the products on which is acted penetrate in all the openings, resulting it difficult to eliminate all the remains.

In the field of the food treatment this is very important, given the possibility the processed food becomes polluted, because of microbiological reasons due to the rotting of the micro organisms.

The danger of pollution mainly results from the remains which were not eliminated and which accumulate at the inner parts among the elements of the arm, in spite of the measures of watertightness of the assembly; being the only solution, to avoid the risk of pollution, a frequent cleaning of the inside of the arm, for which the disassembly is necessary.

In the known realizations of the arms of the indicated type, the disassembly of the arm elements is complicated and in the majority of the cases it can only be carried out by experts, which brings about elevated pollution risks in the use of the mentioned devices.

Patent BE 628800, of the year 1963, includes a solution, which is already of the public domain, on an arm in which the tool is incorporated in an assembly block on the corresponding protection part, which is joined in a disassemblable way with the body of the arm by means of a ferrule. This solution allows to separate the block bearing the tool respect to the arm body, but to disengage the tool it is moreover necessary to disassemble the component set from the mentioned tool bearing block, which can only be carried out after having separated the block respect to the arm body, supposing all this a set of operations which are complicate and expensive.

The Patents FR 9709012, FR 9713551 and FR 9808241 bring about some particular solutions for the disassembly of the part where the arm tool is incorporated, resulting the realization of the two first of the mentioned Patents an excessively complicated assembly, while the realization of the third Patent does not allow the disassembly of the protecting part of the arm tool. In both cases the assembly brings moreover about a high degree of difficulty for the disassembly, requiring the need to use adequate tools, which leaves thus without solving in a practical way the disassembly for the cleaning.

According to the present invention a mincer arm is proposed, of the kind which can be connected to a motor block for its use, in which a constructive and functional realization has been foreseen which allows the simple and fast disassembly of the element components and without the need to use tools.

This arm, object of the invention, includes a tubular body, through whose inside a shaft is included which holds at the end the actuating tool, incorporating the mentioned arm at the rear end a connection for the functional union with the operating motor block, while at the other end a peripheral protection of the actuating tool is incorporated, which in a characteristic way is made up of an independent piece situated in detachable connection.

The mentioned peripheral protection part of the tool arm is fixed on a bushing inserted and solidarized respect to the tubular body, establishing the fastening between the protection part and the bushing, by means of thread, bayonet coupling, or any other conventional solution able to allow the disassembly by means of only an actuation with the hand on the mentioned protection part.

According to a realization, the rotary transmission shaft incorporates at the end an extension piece connected by means of fitting with free extraction, remaining the end of the transmission shaft guided and centred by means of a bearing embedded in a support, while at the supporting extension piece of the tool passes through another support foreseen of watertight means, the mentioned supports are included fastened by the assembly of the protecting part of the tool.

The constructive assembly of the arm end is this way very simple referring to its realization, determining an effective watertight disposition and fastening of the shaft, with the possibility of a very easy disassembly of the whole set, only actuating with the hand on the protecting part of the tool, thanks to the configuration to the mentioned part itself and this without the need to use tools.

This confers to the preconized arm some very favourable cleaning conditions for the total elimination of the residues of the processed products, with the corresponding advantage that the risk of pollution is eliminated when the application is used again.

And on the other hand, when the protecting part of the tool is connected, the set offers some perfect security conditions for the use of the arm, while if the mentioned protecting arm is not connected, the extension piece the tool has leaves its connection with the transmission shaft when the arm is put into using position, which avoids that the tool can be actuated if the mentioned protection part is not incorporated in the assembly.

In view of all this, the mentioned arm, object of the invention certainly has some very advantageous features, acquiring own life and preferable character respect to the known arms with the same application.

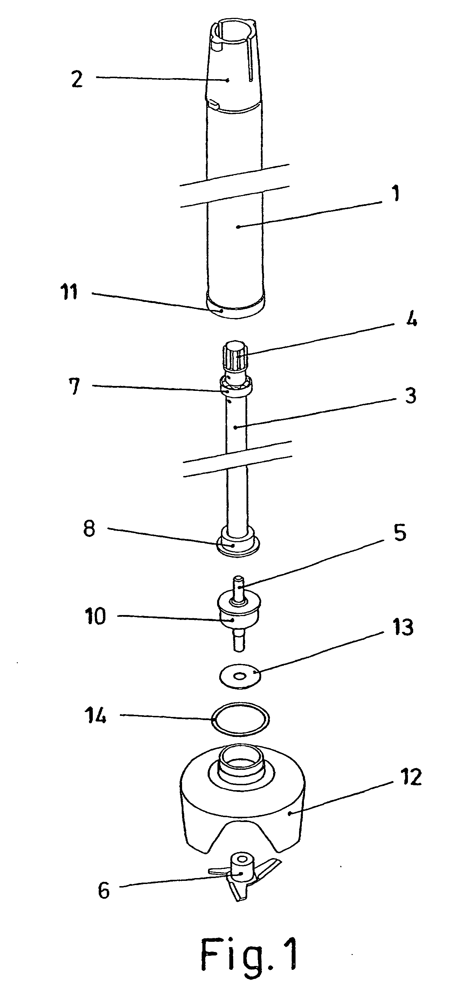

Figure 1 shows a perspective in exploded disposition of the component set of the preconized mincer arm.

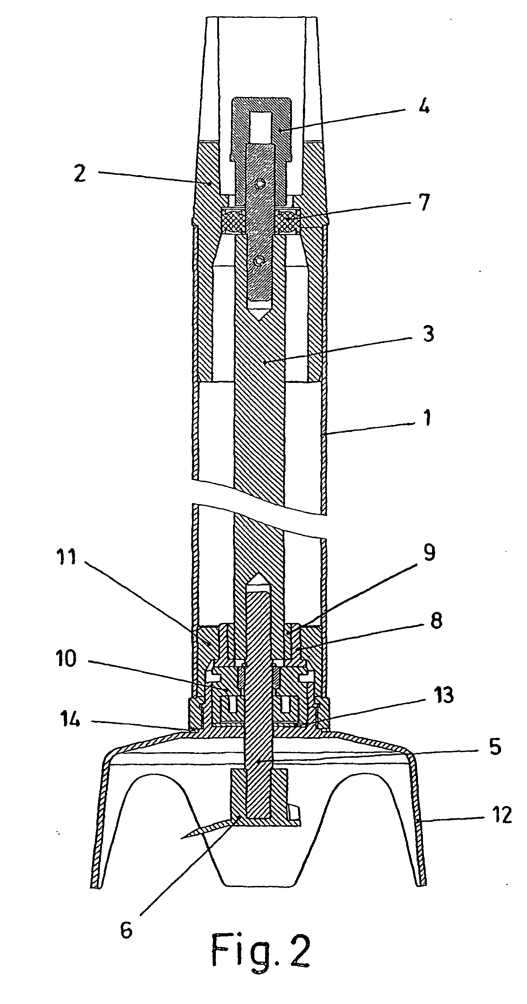

Figure 2 is a view in longitudinal section of the mounted mincer arm.

The object of the invention is a mincer arm of the ones used connected to an operation motor block, fundamentally for applications for food processing, without the exclusion of the possibility of its use for other purposes.

The arm is made up of a tubular body (1) at one end of which a connection (2) is incorporated for the functional union respect to the actuation motor block, with disassembly possibility.

At the inside of the mentioned tubular body (1) a rotary shaft (3) is axially included, which at one end is foreseen of a gear (4) for the functional connection respect to the rotary actuation means included in the motor block, while at the other end of the mentioned shaft (3) an extension piece (5) is incorporated on which an actuation tool (6) is situated in the operations to be carried out, such as a cutting blade or any other kind of actuating tool by means of rotation.

The assembly of the shaft (3) respect to the body (1) is established by means of a guiding bearing (7) incorporated on the rear end of the mentioned shaft (3) and which engages inside the connection (2), and by means of a support (8), through which the other end of the mentioned shaft (3) passes, at which support (8) a bearing (9) which establishes the guiding and the centering of the shaft (3) is embedded.

The extension piece (5) passes in turn through another support (10), foreseen of watertight means, by means of which the centering and guiding of the mentioned extension piece (5) is established, which is connected by means of a solidary rotary engagement but with freedom of extraction with respect to the transmission shaft (3).

At the end of the tubular body (1) a bushing (11) is engaged and solidarily fixed. This bushing determines a connection respect to which the assembly of an independent peripheral protection part (12) of the tool (6) is established.

The assembly connection of the mentioned protection part (12), respect to the bushing (11), is established by means of any system which allows a fast and easy disconnection for the disassembly, such as a threaded fixing, of the kind with bayonet, or any other similar solution, so that, taking advantage of the configuration of the mentioned part (12) itself, it can be disconnected actuating on it with the hand, without the need of any tools.

To carry out the assembly, the tool (6) shall be incorporated at the end of the extension piece (5) after the connection of the part (12) in its assembly, as the mentioned tool (6) is greater than the hole of the mentioned part (12).

The supports (8) and (10) are housed inside the bushing (11), respect to which they remain fastened in the assembly by retention by means of the protection part (12) of the tool (6), so that when the indicated part is disconnected (12), the mentioned supports (8) and (10) can be extracted.

This way the assembly set of the arm end can be disassembled very easily by the user, as it is only necessary to disconnect the protecting part (12) of the tool (6), with which the extension piece (5), which supports the tools (6) remains free to be extracted together with the support (10), being it then also possible to extract the support (8), to disassemble the transmission shaft (3).

In these conditions, the disposition of the protection part (12) assures the assembly of the whole set, allowing by means of its disconnection the disassembly of the whole set without the need of tools, establishing the mentioned part (12) moreover a security which avoids the operation of the tool (6) when it is not incorporated and thus when the tool (6) is not protected peripherally, so as to avoid accidents, as if the mentioned part (12) is not incorporated in the assembly, the support (10) of the extension piece (5) is without retention, so that when the arm is put in working position, the mentioned extension piece, at which the tool (6) is incorporated, leaves the connection with the transmission shaft (3), resulting that the tool (6) is not actuated.

The assembly according to the described disposition, to avoid the operation of the tool (6) when the protection part (12) is not incorporated, is a non limitative realization example, being it possible to adopt other dispositions with the same effect within the fundamental concept of the invention, which is the determination of the peripheral protection of the tool (6) by means of which an independent part (12) which can be disconnected without the need of tools, by simply actuating on it with the hand, for the disassembly of the arm set. In this sense, the extension piece (5) could be anchored with a fixed retention respect to the transmission shaft (3) and this one situated with pushing of a spring towards the extraction, which would produce the same effect of operation impossibility of the tool (6) when the protection part (12) is not incorporated, because the shaft (3) would be disconnected from the operation means of the motor block, thanks to the pushing towards the extraction.

Between the detachable protection parts (12) and the support (10) of the extension piece (5), as well as between the mentioned part (12) and the bushing (11), both unions (13) and (14) are included in the assembly, by means of which a watertightness is determined, which avoids the penetration of the processed products towards the inside. Nevertheless, when the part (12) is disconnected during the disassembly, the mentioned unions (13) and (14) remain free and can be disassembled, to carry out their cleaning and that of their seating in the assembly.

## Claims

1. Mincer arm with removable end for its cleaning, of the kind made up of a tubular body (1) foreseen at one end with a connection (2) for the removable union respect to a motor block, including axially a rotary shaft (3) which includes at the end a tool (6) around which a peripheral protection is established, which is connected in disassemblable union respect to the body (1), **characterized in that** the peripheral protection is made up by means of an independent part (12) which establishes the retention of both supports (8) and (10), which assure the assembly of the shaft (3) and of a disconnectable extension (5) bearing the tool (6), so that when the part (12) is disconnected respect to the body (1), the shaft (3) remains without retention and can leave at the lower part.

2. Mincer arm with removable end for its cleaning, according to the first claim, **characterized in that** the protection part (12) is fixed by itself respect to the tubular body (1).

3. Mincer arm with removable end for its cleaning, according to the first and second claims, **characterized in that** the protection part (12) establishes in the assembly a retention of the actuating connection of the tool (6), together with the transmission shaft (3) retention in the assembly.

## Patentansprüche

1. Mahlarm mit zum Reinigen entfernbarem Ende, von der Art, die ein röhrenförmiges Ende (1) aufweist, das an einem Ende mit einer Kupplung (2) für eine lösbare Verbindung mit einem Motorblock versehen ist, axial eine Drehwelle (3) umfassend, die an ihrem Ende ein Werkzeug (6) aufweist, um das ein Umfangsschutz vorgesehen ist, der in einer lösbaren Verbindung in Bezug auf den Körper (1) angeschlossen ist, **dadurch gekennzeichnet, dass** der Umfangsschutz aus einem unabhängigen Teil (12) gebildet ist, der die Halterung von zwei Lagern (8) und (10) gewährleistet, die die Montage der Welle (3) und einer das Werkzeug (6) tragenden trennbaren Verlängerung (5) gewährleisten, so dass dann, wenn der Teil (12) relativ zu dem Körper (1) gelöst wird, die Welle (3) nicht mehr gehalten wird und am unteren Teil herausgenommen werden kann.

2. Mahlarm mit zum Reinigen entfernbarem Ende nach Anspruch 1, **dadurch gekennzeichnet, dass** der Schutzteil (12) einstückig in Bezug auf den röhrenförmigen Körper (1) befestigt ist.

3. Mahlarm mit zum Reinigen entfernbarem Ende nach den Ansprüchen 1 und 2, **dadurch gekennzeichnet, dass** der Schutzteil (12) bei der Montage eine Halterung der Betätigungskupplung des Werkzeugs (6) zusammen mit der Halterung der Getriebewelle (3) bei der Montage herstellt.

## Revendications

1. Bras triturateur avec extrémité démontable pour le nettoyage, du type composé d'un corps tubulaire (1) doté à une extrémité d'un accouplement (2) pour l'union démontable par rapport à un bloc moteur, comprenant axialement un arbre tournant (3) qui comporte à l'extrémité un outil (6) autour duquel est établie une protection périphérique qui s'accouple en une union démontable par rapport au corps (1), **caractérisé en ce que** la protection périphérique se compose d'une pièce indépendante (12) qui assure la retenue des deux paliers (8) et (10), qui assurent le montage de l'arbre (3) et d'une prolongation désaccouplable (5) portant l'outil (6) pour que, lorsque la pièce (12) est désaccouplée par rapport au corps (1), l'arbre (3) ne soit plus retenu et puisse être retiré à la partie inférieure.

2. Bras triturateur avec extrémité démontable pour le nettoyage, conformément à la première revendication, **caractérisé en ce que** la pièce de protection (12) se fixe seule par rapport au corps tubulaire (1).

3. Bras triturateur avec extrémité démontable pour le nettoyage, conformément aux première et deuxième revendications, **caractérisé en ce que** la pièce de protection (12) établit dans l'ensemble une retenue de l'accouplement actionneur de l'outil (6) ainsi que la retenue de l'arbre de transmission (3) dans l'ensemble.
